# EUROPÄISCHE PATENTSCHRIFT

(11) **EP 0 698 988 B1**
(45) Veröffentlichungstag und Bekanntmachung des Hinweises auf die Patenterteilung: **18.12.2002**
(21) Anmeldenummer: 95201961.0
(22) Anmeldetag: 17.07.1995
(51) Int. Cl.: H04M 19/00

(54) **Schaltungsanordnung mit wenigstens einer aus einer Spannungsquelle zu speisenden Stufe**
Circuit arrangement with at least a stage to be supplied from a voltage source
Circuit comportant au moins un étage alimenté pour une source de tension

(30) Priorität: 27.07.1994 DE 4426511
(43) Veröffentlichungstag der Anmeldung: 28.02.1996
(73) Patentinhaber: Philips Corporate Intellectual Property GmbH, 20099 Hamburg (DE); Koninklijke Philips Electronics N.V., 5621 BA Eindhoven (NL)
(72) Erfinder: Lösel, Walter, D-22335 Hamburg (DE)
(74) Vertreter: Peters, Carl Heinrich, Dipl.-Ing.

(56) Entgegenhaltungen:
- ERICSSON REVIEW, Bd. 58, Nr. 1, 1981 STOCKHOLM, SWEDEN, Seiten 2-8, C. BOIJE ET AL. 'Power Units and Power Distribution in the BYB Construction Practice'
- INTELEC '85, Oktober 1985 MUNICH, GERMANY, Seiten 73-78, R.C. KOHL 'DC Power Distribution and Grounding in the 5ESS Switch'

## Beschreibung

Die Erfindung bezieht sich auf eine Schaltungsanordnung mit wenigstens einer aus einer gemeinsamen Spannungsquelle mit einer Quellenspannung zu speisenden Stufe.

Eine solche Anordnung ist aus dem Dokument Ericsson Review, Bd. 58, Nr.1, 1981 Stockholm, Schweden, Seiten 2-8, L. Boije et al,. Power units and power distribution in the BYB construction practice bekannt.

Derartige Schaltungsanordnungen werden beispielsweise in Fernmeldeanlagen eingesetzt, um ein System von in der Regel mehreren Fernmeldegeräten aus einer gemeinsamen Spannungsquelle, beispielsweise einer Zentralbatterie eines Fernmeldeamtes oder einer Notstromversorgung, mit elektrischer Energie zu speisen. Derartige Zentralbatterien liefern Quellenspannungen mit im wesentlichen zwei unterschiedlichen Nennwerten, und zwar 48 Volt einerseits und 60 Volt. Bei einem Einsatz einer Schaltungsanordnung der eingangs genannten Art an einer bestimmten Zentralbatterie oder dgl. müssen sämtliche Stufen, die aus dieser mit elektrischer Energie gespeist werden, auf den Nennwert der Quellenspannung abgestimmt sein. Dies kann sowohl bei der Installation als auch im Betrieb zu Einstellarbeiten von unerwünschtem Aufwand führen.

Die Erfindung hat die Ausgabe, eine Schaltungsanordnung zu schaffen, in der die von der Quelle gespeisten Stufen sehr einfach an die Quellenspannung anpaßbar sind.

Diese Aufgabe wird erfindungsgemäß gelöst durch eine Schaltungsanordnung mit wenigstens einer aus einer gemeinsamen Spannungsquelle mit einer Quellenspannung zu speisenden Stufe, wobei wenigstens eine dieser Stufen eine Steuersignal-Erzeugungsschaltung aufweist, von der ein aus der Quellenspannung ableitbares Steuersignal an einen für alle Stufen gemeinsamen Steuersignal-Ausgangssammelleiter abgebbar ist, mit einem Steuersignal-Eingangssammelleiter, der mit dem Steuersignal-Ausgangssammelleiter über eine zentrale Brücke verbindbar ist, wenn die Quellenspannung einen Wert innerhalb eines ersten Wertebereichs annimmt, und der durch die zentrale Brücke vom Steuersignal-Ausgangssammelleiter trennbar ist, wenn die Quellenspannung einen Wert innerhalb eines zweiten Wertebereichs annimmt, und mit in jeder Stufe je einer Steuerschaltung, die mit dem Steuersignal-Eingangssammelleiter zum Zuführen des Steuersignals verbindbar ist und mittels derer die Stufe durch das Anlegen bzw. Unterbrechen des Steuersignals auf eine Quellenspannung aus dem zugehörigen Wertebereich einstellbar ist.

Bei der erfindungsgemäßen Schaltungsanordnung wird somit die Anpassung der einzelnen Stufen an die vorliegende Quellenspannung gemeinsam für alle diese Stufen durch die zentrale Brücke vorgenommen. Je nach der anzulegenden Quellenspannung kann die zentrale Brücke eingesetzt oder offengelassen, d.h. leitend oder gesperrt, ausgeführt werden. Dies ist z.B. vorteilhaft beim Anschluß einer größeren Anlage mit vielen Stufen an eine gemeinsame Spannungsquelle. Es müssen dann nicht alle Stufen aufwendig auf die gelieferte Quellenspannung eingestellt werden, wobei immer die Gefahr besteht, daß einzelne Stufen hiervon versehentlich ausgenommen sind und bei Inbetriebnahme beschädigt werden oder mangelhafte Funktion zeigen; vielmehr erfolgt die Einstellung auf die vorliegende Quellenspannung umfassend und sicher durch die zentrale Brücke. Auch bei z.B. Wartungsarbeiten an einer derartigen Anlage können einzelne Stufen problemlos ausgetausch werden, ohne daß dabei die aktuelle Quellenspannung beachtet werden muß. Die Stufen sind dazu je nach dem ihnen zugeführten Steuersignal für die verschiedenen Wertebereiche der Quellenspannung einsetzbar; es müssen somit nicht unterschiedlich aufgebaute Stufen für unterschiedliche Quellenspannung bevorratet werden.

Andererseits kann mit Hilfe der eine Steuersignal-Erzeugungsschaltung aufweisenden Stufen zusätzlich eine Beeinflussung derart vorgenommen werden, daß beim Entfernen aller dieser Stufen aus der betreffenden Anlage ebenfalls ein Steuersignal an den Steuersignal-Eingangssammelleiter gelangt. Dieser Fall entspricht zumindest weitgehend dem Fall der Unterbrechung der zentralen Brücke. Somit kann einerseits die Einstellung auf eine bestimmte Quellenspannung durch die zentrale Brücke nur erfolgen, wenn wenigstens eine Stufe mit einer Steuersignal-Erzeugungsschaltung vorhanden ist; die Einstellung durch die zentrale Brücke wird somit durch eine solche Stufe aktiviert. Andererseits kann auch eine zentrale Brücke dauerhaft eingesetzt werden und die Einstellung auf eine bestimmte Quellenspannung ohne zusätzliche Maßnahmen davon abhängig gemacht werden, ob wenigstens eine Stufe mit einer Steuersignal-Erzeugungsschaltung in der Anlage eingesetzt wird. Durch Einfügen einer solchen Stufe wird dann automatisch einer der beiden Wertebereiche für die Quellenspannung ausgewählt und für alle Stufen vorgegeben. Dadurch können in einer Anlage Stufen für zwei verschiedene Quellenspannungen mit solchen Stufen gemeinsam betrieben werden, die nur für eine der beiden in Frage kommenden Quellenspannungen geeignet sind. Die letzteren enthalten dann je nach dem Wertebereich der Quellenspannung, für den sie eingerichtet sind, eine Steuersignal-Erzeugungsschaltung oder nicht. In dieser Weise sind zahlreiche Kombinationsmöglichkeiten denkbar; durch mehrartrige Steuersignal-Eingangs- bzw. -Ausgangssammelleiter könnte darüberhinaus auch in Zusammenhang mit einer mehrpoligen zentralen Brücke eine Auswahl zwischen mehr als zwei Wertebereichen für die Quellenspannung vorgenommen werden. Eine solche Ausgestaltung der zentralen Brücke erlaubt eine vollautomatische Anpassung einer Anlage auch im Betrieb an unterschiedliche Quellenspannungen, d.h. Quellenspannungen mit unterschiedlichen Nennwerten. Gegebenenfalls kann dabei die Treiberanordnung eine Speichervorrichtung für das Umschaltsignal umfassen, wodurch eine einmal gefundene Einstellung der zentralen Brücke auch bei Störungen oder Unterbrechungen der Quellenspannung erhalten bleibt.

Vorzugsweise bilden die Stufen der erfindungsgemäßen Schaltungsanordnung Stromversorgungen für einzelne Abschnitte einer umfangreicheren Anlage oder beinhalten die Stufen derartige Stromversorgungen. Wie bereits beispielhaft angegeben, können solche Stromversorgungen Teile einer Fernmeldeanlage sein und dann erfindungsgemäß durch die zentrale Brücke wahlweise auf zwei mögliche Quellenspannungen einer Zentralbatterie wahlweise umgeschaltet werden. Anstelle einer Zentralbatterie kann auch eine gleichwertige Notstromversorgung oder dgl. treten; ebenso kann bei einer entsprechenden Ausbildung der zentralen Brücke und der mit ihr zu verbindenden Leiter eine Auswahl zwischen mehr als zwei Batteriespannungen oder dgl. vorgenommen werden.

In der einfachsten Ausgestaltung wird die erfindungsgemäße Schaltungsanordnung eingesetzt für den wahlweisen Betrieb mit Zentralbatterien von entweder 48 V oder 60 V Nennspannung.

Nach einer anderen Fortbildung ist in wenigstens einem Teil der Stufen wenigstens ein auf den Wert der Quellenspannung bezogener Quellenwert durch das Steuersignal umschaltbar. Derartige Schwellenwerte können durch entsprechende Anordnungen innerhalb jeder einzelnen Stufe beispielsweise für eine Überspannungs- oder Unterspannungsabschaltung oder einen Überspannungs- bzw. Unterspannungsalarm vorgesehen sein. Derartige Schwellen, insbesondere durch Abgriff von einer Referenzspannung abgeleitet, werden erfindungsgemäß auf die unterschiedlichen Nennspannungen der Spannungsquelle anpaßbar und entsprechen somit für jede der einzusetzenden Spannungsquellen deren Erfordernissen. Dabei können einerseits die Funktionsfähigkeit der einzelnen Stufen, andererseits auch diejenige der Spannungsquelle für die Wahl der Schwellenwerte eine Rolle spielen. Insbesondere wird die Gefahr der Zerstörung der Stufen durch Überspannungen und die Gefahr einer Überlastung und damit Beschädigung der Spannungsquelle, einhergehend mit einer Unterspannung, vermieden. Die im vorstehenden beschriebene quellenspannungsabhängige, selbsttätige Umschaltung der zentralen Brücke wird dann bevorzugt in der genannten Weise so ausgeführt, daß eine Umgehung der Schwellenwerte ausgeschlossen ist.

Weitere Ausgestaltungen der Erfindung sind in den Unteransprüchen beschrieben.

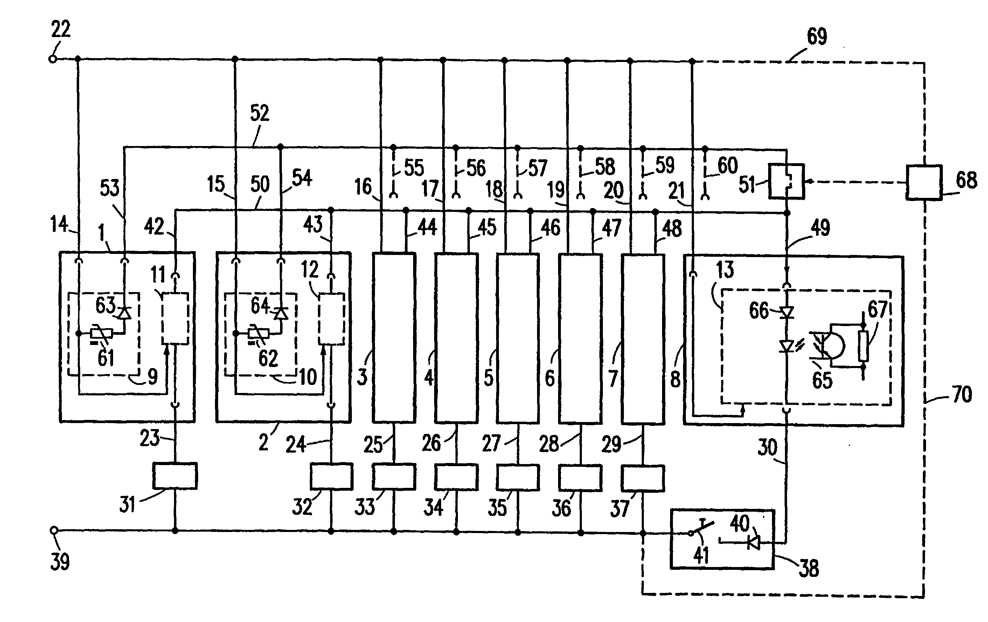

Die Figur zeigt ein Ausführungsbeispiel der erfindungsgemäßen Schaltungsanordnung mit insgesamt 8 Stufen 1 bis 8, von denendie erste und die zweite Stufe 1 und 2 je eine Steuersignal-Erzeugungsschaltung 9 bzw. 10 aufweisen. Alle Stufen 1 bis 8 sind mit je einer Steuerschaltung 11, 12, 13 versehen. Der Einfachheit halber sind in der ersten und zweiten Stufe 1,2 nur jeweils die Steuersignal-Erzeugungsschaltung 9 bzw. 10 explizit und die Steuerschaltung 11 bzw. 12 blockschematisch wiedergegeben; in der achten Stufe 8 ist die zugehörige Steuerschaltung 13 mit den im bezug auf die Erfindung wesentlichen Teilen auszugsweise detailliert dargestellt. Die dritte bis siebte Stufe 3 bis 7 ist jeweils entsprechend der achten Stufe 8 aufgebaut; der Vereinfachung halber sind diese Stufen 3 bis 7 nur blockschematisch angedeutet. Alle Stufen 1 bis 8 stellen im vorliegenden Ausführungsbeispiel Stromversorgungen für eine Fernmeldeanlage dar.

Jede der Stufen 1 bis 8 weist einen ersten Speisespannungsanschluß 14 bis 21 auf, die mit einem ersten Anschluß 22 einer gemeinsamen, in der Figur jedoch nicht explizit dargestellten Spannungsquelle verbunden sind. Dieser erste Anschluß 22 entspricht beispielsweise dem positiven Pol der Spannungsquelle. Die Stufen 1 bis 8 sind weiterhin mit je einem zweiten Speisespannungsanschluß 23 bis 30 über je eine Sicherungsschaltung 31 bis 38 an einen zweiten Anschluß 39 der gemeinsamen Spannungsquelle geführt, im vorliegenden Beispiel vorzugsweise der negative Pol dieser Spannungsquelle. Von allen Sicherungsschaltungen 31 bis 38 ist nur die zur achten Stufe 8 gehörige Sicherungsschaltung 38 explizit dargestellt. Alle übrigen Sicherungsschaltungen 31 bis 37 sind mit der Sicherungsschaltung 38 identisch, die in Reihenschaltung eine Eingangsspannungsentkopplerdiode 40 und eine Stromversorgungssicherung 41 enthält. Durch die Eingangsspannungsentkopplerdiode 40 werden Rückströme in die Stufe 8 unterbunden; die Stromversorgungssicherung 41 trennt bei Überströmen die Stufe 8 von den Anschlüssen 22, 39 der Spannungsquelle ab. Die entsprechenden Funktionen ergeben sich durch die übrigen Sicherungsschaltungen 31 bis 37 auch für die erste bis siebte Stufe 1 bis 7.

Neben dieser Verbindung der Stufen 1 bis 8 zur Energiezufuhr mit den Anschlüssen 22, 39 der Spannungsquelle weist die Schaltungsanordnung gemäß dem vorliegenden Ausführungsbeispiel für jede Stufe einen Steuersignaleingang 42 bis 49 auf. Alle Steuersignaleingänge 42 bis 49 sind mit einem Steuersignal-Eingangssammelleiter 50 verbunden. Der Steuersignal-Eingangssammelleiter 50 ist über eine zentrale Brücke 51 verbindbar mit einem Steuersignal-Ausgangssammelleiter 52. Die erste und die zweite Stufe 1,2 weisen je einen Steuersignal-Ausgang 53,54 auf, welche beide mit dem Steuersignal-Ausgangssammelleiter 52 verbunden sind. Die übrigen Stufen, d.h. die dritte bis achte Stufe 3 bis 8, sind nicht mit dem Steuersignal-Ausgangssammelleiter 52 verbunden. Für diese Stufen können jedoch - wie in der Figur gestrichelt dargestellt-Anschlüsse 55 bis 60 an den Steuersignal-Ausgangssammelleiter 52 vorgesehen sein. Dies ist dann von Vorteil, wenn die Stufen 1 bis 8 austauschbar, beispielsweise steckbar, in die gesamte Schaltungsanordnung eingefügt sind, wie dies durch die angedeuteten Steckverbindungen bei den Stufen 1, 2 und 8 in den Speisespannungsanschlüssen 14, 15, 21 bzw. 23, 24, 30, den Steuersignaleingängen 42, 43, 49 sowie den Steuersignalausgängen 53, 54 dargestellt ist. Entsprechendes gilt selbstverständlich auch für die nicht näher dargestellte Ausbildung der entsprechenden Verbindungen der übrigen Stufen 3 bis 7. Duch die für jeden Steckplatz für je eine der Stufen vorgesehenen Anschlüsse 55 bis 60 können Stufen in der Art der ersten und der zweiten Stufe 1,2, die eine Steuersignal-Erzeugungsschaltung 9 bzw. 10 aufweisen, auch an den Platz jeder anderen der Stufen 1 bis 8 eingesteckt werden, wodurch die zugehörigen Anschlüsse 55 bis 60 im gegebenen Fall die Funktion eines Steuersignal-Ausgangs entsprechend den Steuersignal-Ausgängen 53, 54 übernehmen. Die Stufen 1, 2, die eine Steuersignal-Erzeugungsschaltung 9, 10 aufweisen, werden auch als "zentrale Stufen" bezeichnet. In einem besonderen Ausführungsbeispiel bilden die Stufen 1 bis 8 Stromversorgungen für Teile oder Module einer gesamten Fernmeldeanlage. In diesem Fall bezeichnet man die Stufen 1, 2 als "zentrale Stromversorgungen".

Jede der Steuersignale-Erzeugungsschaltungen 9,10 im vorliegenden Ausführungsbeispiel umfaßt ein PTC-Element, vorzugsweise einen PTC-Widerstand 61 bzw. 62, in Reihenschaltung mit einem Gleichrichterelement 63 bzw. 64. Jede dieser Reihenschaltungen 61, 63 bzw. 62, 64 ist zwischen dem ersten Speisespannungsanschluß 14 bzw. 15 der zugehörigen Stufe 1 bzw. 2 und dem Steuersignal-Ausgang 53 bzw. 54 angeordnet, so daß über diese Reihenschaltungen das zugehörige Steuersignal aus der Quellenspannung am ersten Anschluß 22 der Spannungsquelle ableitbar ist. Die PTC-Elemente sind dabei so dimensioniert, daß sie den als Steuersignal in den Steuersignal-Ausgangssammelleiter 52 fließenden Strom auf einen Wert begrenzen, der für die Lieferung des Steuersignals an alle Steuersignaleingänge 42 bis 49 benötigt wird. Die Gleichrichterelemente 63,64 dienen außerdem der Entkopplung der Steuersignal-Erzeu gungsschaltungen 9,10 voneinander. Zur Erzeugung des Steuersignals ist grundsätzlich eine "zentrale Stufe", d.h. eine Steuersignal-Erzeugungsschaltung 9 oder 10, ausreichend. Im beschriebenen Beispiel werden zwei Steuersignal-Erzeugungsschaltungen 9, 10 aus Gründen der Redundanz eingesetzt. Beim Ausfall einer der Steuersignal-Erzeugungsschaltungen 9, 10 bleibt die gesamte Schaltungsanordnung funktionsfähig.

Am Beispiel der achten Stufe 8 ist der Aufbau der Steuerschaltungen der einzelnen Stufen am Beispiel der Steuerschaltung 13 näher dargestellt. Diese Steuerschaltung 13 enthält zwischen dem Steuersignaleingang 49 und dem zweiten Speisespannungsanschluß 30 die Reihenschaltung aus dem Eingangskreis eines Optokopplers 65 und aus einer Konstantstromdiode 66. Wird über die zentrale Brücke 51 das Steuersignal vom Steuersignal-Ausgangssammelleiter 52 her angelegt, fließt durch diese Reihenschaltung aus der Konstantstromdiode 66 und dem Eingangskreis des Optokopplers 65 ein bestimmter Strom, durch den über den Ausgangskreis des Optokopplers 65 ein Schaltvorgang ausgelöst wird. Im dargestellten Beispiel ist ein Widerstand 67 angedeutet, der durch den Ausgangskreis des Optokopplers 65 überbrückt werden kann. Durch den Optokoppler 65 kann somit dieser Widerstand und daran angeschlossene Schaltvorrichtungen am Potential frei vom Steuersignal geschaltet werden. Die Konstantstromdiode 66 ist im Zusammenhang mit dem Eingangskreis des Optokopplers 65 und dem bzw. den PTC-Element(en) 61, 62 dimensioniert. Als Steuersignal treten somit einerseits vorbestimmte Ströme auf; andererseits übernehmen die bzw. übernimmt das PTC-Element(e) 61, 62 die Funktion eines Überstromschutzes bei defekten in der Schaltungsanordnung.

Über den Optokoppler 65 können durch die Steuerschaltung 13 (bzw. für die übrigen Stufen die entsprechenden Steuerschaltungen 11,12 usw.) vornehmlich die Umschaltung der Stufen 1 bis 8 auf unterschiedliche Quellenspannungen und darüberhinaus auch verschiedene, auf diese Quellenspannungen bezogene Schwellenwerte umgeschaltet werden. Vorzugsweise ist eine mit einer Stufe 1, 2, ... bzw. 8 gebildete Stromversorgung mit einer in der Figur jedoch nicht dargestellten Einrichtung zur Überspannungsund/oder zur Unterspannungs-Abschaltung versehen. Durch diese Einrichtungen wird die Energiezufuhr über die Speisespannungsanschlüsse 14, 15, ... bzw. 21 unterbrochen, wenn die an den Anschlüssen 22, 39 anliegende Quellenspannung einen Nominalwert um bestimmte Prozentsätze über- bzw. unterschreitet. Außerdem können weitere Schwellenwerte mit vorzugsweise geringeren Prozentsätzen Abweichung zu dem Nominalwert vorgesehen sein, durch die vor dem Abschalten ein entsprechender Überspannungs- bzw. Unterspannungs-Alarm ausgelöst werden kann. Diese Schwellenwerte müssen mit der Umschaltung der Nominalwerte der Quellenspannungen, auch als Umschaltung zwischen verschiedenen Wertebereichen der Quellenspannung bezeichnet, ebenfalls verändert werden, was bevorzugt auch durch den Optokoppler 65 (und entsprechende weitere Optokoppler in den anderen Stufen 1 bis 7) vorgenommen wird.

Die zentrale Brücke 51 ist im einfachsten Fall als von Hand einsteckbare bzw. betätigbare Leitungsverbindung ausgeführt. Dadurch kann die gesamte Schaltungsanordnung mit allen Stufen 1 bis 8 unabhängig davon aufgebaut werden, in welchem Wertebereich die im Einsatz anzulegende Quellenspannung an den Anschlüssen 22, 39 auftreten soll, also an welcher Art von Spannungsquelle die gesamte Anlage später betrieben werden soll. Vor dem ersten Inbetriebnehmen wird dann entsprechend der vorliegenden bzw. ausgewählten Quellenspannung die zentrale Brücke eingefügt oder auch aufgetrennt bzw. weggelassen, wodurch die gesamte Anlage ohne weitere Maßnahmen unmittelbar für den Einsatz an der vorliegenden Quellenspannung bereit ist. Dies erleichtert sowohl den Aufbau und die Inbetriebnahme einer solchen Anlage als auch deren Erweiterung, Unterhaltung und Wartung, insbesondere beim Austausch einzelner. Stufen 1 bis 8.

In der Figur ist zusätzlich durch gestrichelte Linien eine Ausführungsform angedeutet, in der die zentrale Brücke 51 mit einer Schaltvorrichtung zum wahlweisen Trennen oder Verbinden des Steuersignals-Eingangssammelleiters 50 mit dem Steuersignal-Ausgangssammelleiter 52 ausgebildet ist sowie mit einer Treiberanordnung 68, der über zwei Leitungen 69, 70 die Quellenspannung von den Anschlüssen 22, 39 zuleitbar ist. Die Treiberanordnung 68 erzeugt ein Umschaltsignal, welches der zentralen Brücke 51 bzw. der sie bildenden Schaltvorrichtung zugeleitet wird. Gemäß diesem Umschaltsignal wird die zentrale Brücke 51 leitend oder gesperrt geschaltet. Das Umschaltsignal wird in der Treiberanordnung 68 nach Maßgabe eines Vergleichs gebildet, innerhalb welchen Wertbereiches sich der Wert der Quellenspannung befindet. Dadurch kann automatisch auf die aktuell angelegte Quellenspannung umgeschaltet und die gesamte Anlage auf diese Quellenspannung eingestellt werden.

Dabei ist jedoch zu beachten, daß eine Umschaltung beispielsweise auf einen niedrigeren Nominalwert der Quellenspannung nicht automatisch dann vorgenommen wird, wenn die aktuelle Quellenspannung aufgrund eines Fehlers einen zu niedrigen Wert annimmt, der in den Wertebereich um diesen niedrigeren Nominalwert fällt. Dies kann dadurch verhindert werden, daß die Treiberanordnung 68 eine Speichervorrichtung enthält, in der ein Vergleichsergebnis zu einem Zeitpunkt gespeichert wird, in dem die Quellenspannung fehlerfrei zugeführt wird.

Die beschriebene Schaltungsanordnung ist in einfacher Weise auf verschiedene Arten erweiterbar. Zum einen kann die Anzahl der Stufen 1 bis 8 bei sonst unveränderter Anordnung ohne Aufwand verändert werden, es können sowohl weniger als auch mehr Stufen zum Einsatz kommen. Andererseits können auch mehr als zwei zugelassene Wertebereiche für die Quellenspannung vorgesehen sein. Vorzugsweise werden dann der Steuersignal-Eingangssammelleiter 50, die zentrale Brücke 51, der Steuersignal-Ausgangssammelleiter 52 sowie alle damit verbundenen Anschlüsse, Ein- und Ausgänge mehradrig ausgeführt. Durch wahlweise Kombination des Verbindens bzw. Auftrennens dieser Adern durch die (mehradrige) zentrale Brücke 51 können dann auch Steuersignale mit insgesamt mehr als zwei Signalwerten übertragen werden. In einer Vereinfachung eines solchen Systems können sogar die Steuersignal-Erzeugungsschaltungen 9,10 und der Steuersignal-Ausgangssammelleiter 52 unverändert bleiben; lediglich die zentrale Brücke 51 und der Steuersignal-Eingangssammelleiter 50 mit den daran angeschlossenen Verbindungen sind mehradrig ausgeführt.

## Patentansprüche

1. Schaltungsanordnung mit wenigstens einer aus einer gemeinsamen Spannungsquelle (an 22, 39) mit einer Quellenspannung zu speisenden Stufe (1 bis 8)
**dadurch gekennzeichnet, daß** wenigstens eine dieser Stufen (1, 2) eine Steuersignal-Erzeugungsschaltung (9, 10) aufweist, von der ein aus der Quellenspannung ableitbares Steuersignal an einen für alle Stufen gemeinsamen Steuersignal-Ausgangssammelleiter (52) abgebbar ist, mit einem Steuersignal-Eingangssammelleiter (50), der mit dem Steuersignal-Ausgangssammelleiter (52) über eine zentrale Brücke (51) verbindbar ist, wenn die Quellenspannung einen Wert innerhalb eines ersten Wertebereichs annimmt, und der durch die zentrale Brücke (51) vom Steuersignal-Ausgangssammelleiter (52) trennbar ist, wenn die Quellenspannung einen Wert innerhalb eines zweiten Wertebereichs annimmt, und mit in jeder Stufe (1 bis 8) je einer Steuerschaltung (11, 12, 13), die mit dem Steuersignal-Eingangssammelleiter (50) zum Zuführen des Steuersignals verbindbar ist und mittels derer die Stufe (1 bis 8) durch das Anlegen bzw. Unterbrechen des Steuersignals auf eine Quellenspannung aus dem zugehörigen Wertebereich einstellbar ist.

2. Schaltungsanordnung nach Anspruch 1,
**dadurch gekennzeichnet,**
**daß** die zentrale Brücke (51) eine Schaltvorrichtung zum wahlweisen Trennen oder Verbinden des Steuersignal-Eingangssammelleiters (50) mit dem Steuersignal-Ausgangssammelleiter (52) sowie eine Treiberanordnung (68) umfaßt, der die Quellenspannung zuleitbar ist zum Erzeugen eines der Schaltvorrichtung zuzuleitenden Umschaltsignals nach Maßgabe eines Vergleichs, innerhalb welchen Wertebereiches sich der Wert der Quellenspannung befindet.

3. Schaltungsanordnung nach Anspruch 1 oder 2,
**dadurch gekennzeichnet,**
**daß** die Stufen (1 bis 8) Stromversorgungen bilden.

4. Schaltungsanordnung nach Anspruch 3,
**dadurch gekennzeichnet,**
**daß** die Stromversorgungen von einer Fernmeldeanlage umfaßt werden und durch die zentrale Brücke (51) eine wahlweise Umschaltung auf zwei mögliche Quellenspannungen einer Zentralbatterie erfolgt.

5. Schaltungsanordnung nach einem der vorhergehenden Ansprüche,
**dadurch gekennzeichnet.**
**daß** in wenigstens einem Teil der Stufen (1 bis 8) wenig stens ein auf den Wert der Quellenspannung bezogener Schwellenwert durch das Steuersignal umschaltbar ist.

6. Schaltungsanordnung nach einem der vorhergehenden Ansprüche,
**dadurch gekennzeichnet,**
**daß** die Steuersignal-Erzeugungsschaltungen (9, 10) je eine Reihenschaltung aus einem PTC-Element (61, 62) und einem Gleichrichterelement (63, 64) umfassen, über die das Steuersignal aus der Quellenspannung ableitbar ist.

7. Schaltungsanordnung nach einem der vorhergehenden Ansprüche,
**dadurch gekennzeichnet.**
**daß** jede Steuerschaltung (11, 12, 13) eine zwischen dem Steuersignal-Eingangssammelleiter (50) und einem Anschluß (39) der gemeinsamen Spannungsquelle angeordnete Reihenschaltung aus dem Eingangskreis eines Optokopplers (65) und aus einer Konstantstromdiode (66) umfaßt.

## Claims

1. A circuit arrangement which comprises at least one stage (1 to 8) which is to be fed by a source voltage from a common voltage source (22, 39), **characterized in that** at least one of these stages (1, 2) comprises a control signal generating circuit (9, 10) which can apply a control signal, to be derived from the source voltage, to a control signal output bus conductor (52) which is common to all stages, a control signal input bus conductor (50) which can be connected to the control signal output bus conductor (52) *via* a central bridge (51) when the source voltage assumes a value within a first value range and can be isolated from the control signal output bus conductor (52) by the central bridge (51) when the source voltage assumes a value within a second value range, each stage (1 to 8) comprising a respective control circuit (11, 12, 13) which can be connected to the control signal input bus conductor (50) in order to apply the control signal and which can adjust the stage (1 to 8) to a source voltage from the associated value range by application or interruption of the control signal.

2. A circuit arrangement as claimed in Claim 1, **characterized in that** the central bridge (51) comprises a switching device for isolating or connecting, as desired, the control signal input bus conductor (50) from or to the control signal output bus conductor (52), as well as a driver device (68) whereto the source voltage can be applied in order to generate a switch-over signal, to be applied to the switching device, in conformity with a comparison as to in which value range the value of the source voltage is situated.

3. A circuit arrangement as claimed in Claim 1 or 2, **characterized in that** the stages (1 to 8) constitute power supplies.

4. A circuit arrangement as claimed in Claim 3, **characterized in that** the power supplies are included in a telecommunication system and that the central bridge (51) performs switching over, as desired, to two possible source voltages of a central battery.

5. A circuit arrangement as claimed in one of the preceding Claims, **characterized in that** in at least a part of the stages (1 to 8) at least one threshold value related to the value of the source voltage can be switched over by the control signal.

6. A circuit arrangement as claimed in one of the preceding Claims, **characterized in that** the control signal generating circuits (9, 10) comprise a respective series connection of a PTC element (61, 62) and a rectifier element (63, 64) *via* which the control signal can be derived from the source voltage.

7. A circuit arrangement as claimed in one of the preceding Claims, **characterized in that** each control circuit (11, 12, 13) comprises a series connection of the input circuit of an optocoupler (65) and a constant current diode (66), which series connection is connected between the control signal input bus conductor (50) and a terminal (39) of the common voltage source.

## Revendications

1. Circuit avec au moins un étage (1 à 8) alimenté en une tension source à partir d'une source de tension commune (en 22, 39) **caractérisé en ce qu'**au moins un de ces étages (1, 2) présente un circuit de production de signal de commande (9, 10) par lequel un signal de commande à dériver de la tension source peut être délivré à un collecteur de sortie de signal de commande (52) commun pour tous les étages, avec un collecteur d'entrée de signal de commande (50) qui peut être relié par l'intermédiaire d'un pont central (51) au collecteur de sortie de signal de commande (52) lorsque la tension source adopte une valeur dans une première plage de valeurs et peut être séparée par le collecteur de sortie du signal de commande (52) par le pont central (51) lorsque la tension source adopte une valeur dans une deuxième plage de valeur et avec, dans chaque étage (1 à 8), un circuit de commande respectif (11, 12, 13) qui peut être relié au collecteur d'entrée de signal de commande (50) pour l'alimentation du signal de commande et à l'aide duquel l'étage (1à 8) peut être réglé par l'application ou l'interruption du signal de commande sur une tension source à partir de la plage de valeurs correspondante.

2. Circuit selon la revendication 1, **caractérisé en ce que** le pont central (51) comprend un dispositif de commutation pour la séparation ou la connexion au choix du collecteur d'entrée de signal de commande (50) avec le collecteur de sortie de signal de cammande (52) ainsi qu'un circuit d'attaque (68) auquel peut être amené la tension source pour la production d'un signal de commutation à amener au dispositif de commutation en fonction d'une comparaison de la plage de valeur dans laquelle se trouve la valeur de la tension source.

3. Circuit selon l'une des revendications 1 ou 2, **caractérisé en ce que** les étages (1 à 8) forment des alimentations électriques.

4. Circuit selon la revendication 3, **caractérisé en ce que** les alimentations électriques sont comprises par une installation de télécommunication et le pont central (51) effectue une commutation au choix sur deux tensions sources possibles d'une batterie centrale.

5. Circuit selon l'une des revendications précédentes, **caractérisé en ce qu'**au moins une valeur seuil rapportée à la valeur de la tension source peut être commutée par le signal de commande dans au moins une partie des étages (1 à 8).

6. Circuit selon l'une des revendications précédentes, **caractérisé en ce que** les circuits de production de signal de commande (9, 10) comprennent respectivement un montage en série d'un élément PTC (61, 62) et d'un élément redresseur (63, 64) par l'intermédiaire desquels le signal de commande peut être dérivé de la tension source.

7. Circuit selon l'une des revendications précédentes, **caractérisé en ce que** chaque circuit de commande (11, 12, 13) comprend un montage en série disposé entre le collecteur d'entrée de signal de commande (50) et une borne (39) de la source de tension commune à partir du circuit d'entrée d'un optocoupleur (65) et d'une diode à courant constant (66).
